# EUROPÄISCHE PATENTSCHRIFT

(11) **EP 1 082 548 B1**
(45) Veröffentlichungstag und Bekanntmachung des Hinweises auf die Patenterteilung: **21.05.2003**
(21) Anmeldenummer: 00910874.7
(22) Anmeldetag: 22.03.2000
(51) Int. Cl.: F16D 3/04

(54) **KUPPLUNGSELEMENT ZUR VERBINDUNG VON ZWEI GLEICHACHSIG, HINTEREINANDER UND MIT QUERABSTAND ZUEINANDER ANGEORDNETEN, ACHSPARALLELEN WELLEN**
COUPLING ELEMENT FOR CONNECTING TWO SHAFTS WHICH ARE PARALLEL TO AN AXIS AND ARRANGED BEHIND EACH OTHER ON THE SAME AXIS WITH A CROSS-DISTANCE THEREBETWEEN
ELEMENT D'ACCOUPLEMENT POUR LA LIAISON DE DEUX ARBRES A AXE PARALLELE PLACES COAXIALEMENT L'UN DERRIERE L'AUTRE ET AVEC UN ECART TRANSVERSAL L'UN PAR RAPPORT A L'AUTRE

(30) Priorität: 24.03.1999 DE 19913177; 18.08.1999 DE 19939210; 23.02.2000 DE 10008425
(43) Veröffentlichungstag der Anmeldung: 14.03.2001
(73) Patentinhaber: FEV Motorentechnik GmbH, 52078 Aachen (DE)
(72) Erfinder: PISCHINER, Stefan, D-52076 Aachen (DE); YAPICI, Kurt, Imren, D-52249 Eschweiler (DE)
(74) Vertreter: Langmaack, Jürgen, Dipl.-Ing.
(86) Internationale Anmeldenummer: EP0002527
(87) Internationale Veröffentlichungsnummer: WO00057074

(56) Entgegenhaltungen:
- CH-A- 424 392
- DE-B- 1 284 178
- US-A- 3 407 628

## Beschreibung

Die Erfindung betrifft ein Kupplungselement zur Verbindung von zwei gleichachsig hintereinander und mit Querabstand achsparallel zueinander angeordneten Wellen nach dem Oberbegriff des Anspruchs 1. Ein solches Kupplungselement ist aus DE-B-12 84 178 bekannt. Ein anderes Kupplungselement ist für Wellen, die in festem Querabstand zueinander angeordnet sind, aus DE-733 932 grundsätzlich bekannt.

In bestimmten Anwendungsfällen ist es erforderlich, daß die Höhenlage einer der Wellen zu einer festen Bezugsebene verändert werden muß, während die andere Welle ihre definierte Lage zur Bezugsebene behält. Das Problem besteht hierbei darin, daß beide Wellen trotz der einstellbaren Veränderung der Höhenlage zur Bezugsebene im gleichen Drehsinn und insbesondere mit gleicher Drehzahl umlaufen müssen, wobei durch das Kupplungselement auf die angetriebene Welle keine Drehzahlschwankungen aufgeprägt werden dürfen.

Ein derartiger Anwendungsfall ist beispielsweise bei einer Kolbenbrennkraftmaschine mit veränderbarem Brennraum gegeben, bei der die Veränderung des Brennraumes durch ein Anheben bzw. Ansenken der Kurbelwellendrehachse gegenüber einer Bezugsebene vorgenommen wird.

Aus DE-36 44 721-A ist eine derartige Kolbenbrennkraftmaschine bekannt, bei der dieses Problem dadurch gelöst worden ist, daß an einem Verstellexzenter für die Veränderung der Höhenlage der Kurbewelle ein Lagergehäuse befestigt ist, in das einenends ein mit der Kurbelwelle verbundenes Antriebsritzel hineinragt und in das anderenends mit dem vorgegebenen Querabstand ein mit der Abtriebswelle verbundenes Abtriebsritzel hineinragt. Die Drehachse des Stellexzenters fällt mit der Drehachse des Abtriebsritzels zusammen. Die Kraftübertragung zwischen dem Antriebsritzel an der Kurbelwelle und dem Abtriebsritzel erfolgt durch ein gleichachsiges Umlaufräderpaar, von denen ein Rad auf dem Antriebsritzel abrollt und das andere Rad auf dem Abtriebsritzel abrollt. Mit dieser Anordnung ist jede Höhenverstellung ohne die Aufprägung von Drehungleichförmigkeiten auf den Abstriebsstrang gewährleistet. Der Nachteil besteht jedoch darin, daß nur Raum für geringe Zahnraddurchmesser zur Verfügung steht, so daß das gesamte Drehmoment der Kolbenbrennkraftmaschine über Zahnräder mit geringem Durchmesser übertragen werden muß. Hierdurch ergeben sich sehr schnell Grenzen in der Größe des übertragbaren Drehmomentes. Ferner müssen die Zahnkräfte als Reaktionskräfte über eine entsprechende Lagerung im unmittelbaren Getriebebereich aufgenommen werden. Ein weiterer Nachteil der Anordnung besteht in einer verhältnismäßig großen Baulänge.

Der Erfindung liegt nun die Aufgabe zugrunde, ein Kupplungselement zu schaffen, das die Probleme einer einstellbaren Wellenverlagerung löst und mit dem große Drehmomente übertragen werden können und das gleichzeitig aber auch kurz baut und das auch zur Verbindung einer Kurbelwelle einer Kolbenbrennkraftmaschine mit einer Antriebswelle einsetzbar ist.

Diese Aufgabe wird gemäß der Erfindung gelöst durch ein Kupplungselement nach Anspruch 1. Mit Hilfe eines derartigen Kupplungselementes ist es möglich, innerhalb der vorgegebenen Exzentrizität e beliebige Höhenlagen der achsparallel zueinander bewegbaren Wellen einzustellen, wobei gewährleistet ist, daß die Drehzahl des antreibenden Drehkörpers über die Kurbelelemente ohne jegliche Drehzahlschwankung auf den angetriebenen Drehkörper übertragen wird. Über die Dimensionierung der Kurbelelemente in den Drehkörpern ist eine Auslegung für das jeweils zu übertragende maximale Drehmoment möglich. Neben einer entsprechenden Dimensionierung kann auch noch durch eine Erhöhung der zahl der Kurelelemente auf einem oder auch unterschiedlichen Teilkreisen das durchleitbare maximale Drehmoment vergrößert werden. Ein besonderer Vorteil des erfindungsgemäßen Kupplungselementes besteht darin, daß keine Rückstellkräfte auf die Lagerungen der Drehkörper wirken. Dies ist insbesondere bei der Verwendung an einer Motorkurbelwelle von Bedeutung.

Entsprechend dem zu übertragenden Drehmoment ist es grundsätzlich möglich, mehrere Kurbelelemente auf den Umfang der Drehkörper verteilt vorzusehen, wobei die Kurbelelemente jeweils auch auf verschiedenen Radien mit ihren Kurbelachsen in den zugehörigen Drehkörpern gelagert sein können. In der Ausgestaltung der Erfindung ist hierbei vorgesehen, daß jeweils mehrere Kurbelelemente in Gruppen angeordnet sind, wobei die Gruppen in Umfangsrichtung gesehen, in gleichem Umfangswinkel zueinander angeordnet sind. Mit einer derartigen gruppenweisen Anordnung ist es möglich, bei der Verwendung an Kolbenbrennkraftmaschinen, bei denen die Kurbelwelle gegenüber der ortsfest gelagerten Abtriebswelle im Motorgehäuse verlagerbar ist, auf die Zündabstände des jeweiligen Verbrennungsmotors Rücksicht zu nehmen. Damit wird ein optimales Tragen der Kurbelelemente erreicht. Da die Wirklinien der Übertragungskräfte Parallelen in Richtung der Verbindung der Exzentermittelinie sind, ändert sich der wirksame Hebelarm mit der Drehung des Kupplungselementes, so daß der wirksame Hebelarm der Kurbeln sich periodisch von 0 auf r, d. h. am Kurbelradius ändert und so jeweils der Übertragung des Drehmomentes anteilig helfen können.

In vorteilhafter Ausgestaltung der Erfindung ist ferner vorgesehen, daß das Kurbelelement aus einem ersten und einem zweiten Zylinderkörper gebildet wird, die achsversetzt zueinander angeordnet sind. Hierdurch ergibt sich ein sehr kurzbauendes Kurbelelement. Die Anordnung kann hierbei so getroffen werden, daß die Zylinder den gleichen Durchmesser aufweisen. Zweckmäßig ist es jedoch, wenn das Kurbelelement einen ersten Zylinderkörper aufweist der einen größeren Durchmesser als der zweite Zylinderkörper aufweist, wobei der zweite Zylinderkörper sich innerhalb des Außenumfangs des ersten Zylinderkörpers erstreckt und diesen in Achsrichtung zumindest auf einer Seite überragt. Zweckmäßig ist es hierbei, wenn der erste Zylinderkörper in seinem vom zweiten Zylinderkörper nicht überdeckten Bereich mit einer Unwucht mindernden Ausnehmung versehen ist. Die Ausnehmung kann hierbei so bemessen sein, daß die durch die Ausnehmung aus dem ersten Zylinderkörper "fehlende" Masse in etwa der Masse des zweiten Zylinderkörpers entspricht.

Zur kippfreien Übertragung des durchzuleitenden Drehmomentes vom treibenden Drehkörper auf den getriebenen Drehkörper ist es in einer bevorzugten Ausgestaltung der Erfindung vorgesehen, daß ein Drehkörper, vorzugsweise der getriebene Drehkörper, zwei mit Abstand zueinander angeordnete und fest miteinander verbundene Scheibenteile aufweist, und daß der andere, vorzugsweise der treibende Drehkörper, scheibenförmig ausgebildet und zwischen den beiden Scheibenteilen angeordnet ist, und daß die Kurbelelement jeweils in beiden Scheibenteilen des einen Drehkörpers einerseits und im dazwischen liegenden Drehkörper andererseits gelagert sind. Dies ist mit einem Kurbelelement der vorstehend beschriebenen erfindungsgemäßen Art möglich, bei dem der einen größeren Durchmesser aufweisende erste Zylinderkörper nach beiden Seiten hin jeweils von einem Zylinderkörper mit geringerem Durchmesser überragt wird. Ein derart gestaltetes Kurbelelement ist dann mit seinem ersten Zylinderkörper in dem zwischen den beiden Scheibenteilen liegenden Drehkörper gelagert, während die exzentrisch zur Drehachse des ersten Zylinderkörpers mit großem Durchmesser angeordneten zweiten Zylinderkörper mit kleinem Durchmesser in den beiden Scheibenteilen des anderen Drehkörpers gelagert sind. Durch ein derartiges zweifach gelagertes Kurbelelement ergibt sich dann eine kippfreie Übertragung des durchzuleitenden Drehmomentes.

Besonders zweckmäßig ist es, wenn der erste Drehkörper mit einem Scheibenteil mit der ortsfest gelagerten Welle fest verbindbar ist und mit seinem anderen Scheibenteil auf einer koaxial zu dieser Welle angeordneten ortsfesten Abstützung drehbar gelagert ist, so daß auch dieser erste Drehkörper zweifach gelagert ist und damit eine kippfreie Drehmomentdurchleitung möglich ist.

Die Erfindung wird anhand schematischer Zeichnungen näher erläutert. Es zeigen:
- Fig. 1: als Anwendungsbeispiel eine perspektivische Schemadarstellung einer Vierzylinder-Kolbenbrennkraftmaschine mit verlagerbarer Kurbelwelle zur Veränderung des Verdichtungsverhältnisses,
- Fig. 2: einen Horizontalschnitt durch ein Kupplungselement, das nicht erfindungsgemäß ist, gemäß der Linie II-II in Fig. 1,
- Fig. 3: eine Aufsicht auf das Kupplungselement gemäß Fig. 2 in Achsrichtung gesehen,
- Fig. 4: eine Aufsicht auf ein Kupplungselement mit einem "Koppelstern" für eine 4-Zylinder-Reihenmaschine,
- Fig. 5: eine Aufsicht entsprechend Fig. 4 mit einem "Koppelstern für eine 3-Zylinder-Reihenmaschine,
- Fig. 6: eine Aufsicht entsprechend Fig. 4 mit einem "Koppelstern" für eine 8-Zylinder-Reihenmaschine,
- Fig. 7: einen Vertikalschnitt durch eine Ausführungsform eines Kupplungselementes zur kippfreien Drehmomentübertragung,
- Fig. 8: den Drehmomentverlauf in Abhängigkeit von der Kurbelwellendrehung bei einer 4-Zylinder-Viertekt-Reihenmaschine.

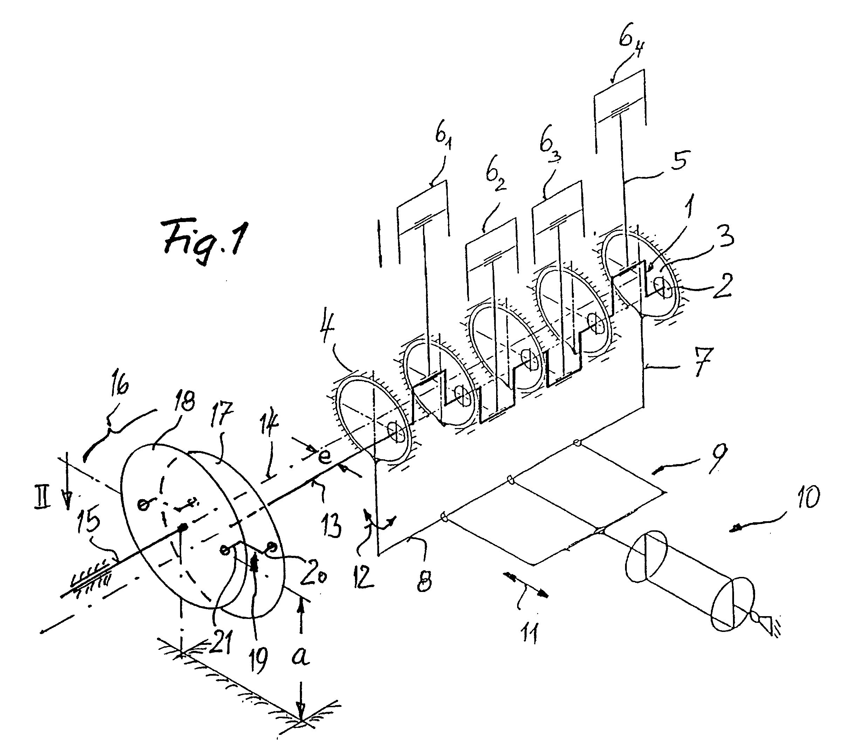

Wie die schematische Darstellung gem. Fig. 1 erkennen läßt, ist eine Kurbelwelle 1 einer 4-Zylinder-Kolbenbrennkraftmaschine mit ihren Kurbelwellenlagern 2 in Exzenterringen 3 gelagert, die ihrerseits verdrehbar in entsprechende Traglagergn eines angedeuteten Motorblocks 4 gelagert sind. Mit der Kurbelwelle 1 sind über Pleuel 5 jeweils die hier nur schematisch angedeuteten Kolben 6 verbunden. Die Kurbelwelle ist in einer Stellung gezeigt, in der die Kolben 6₁ und 6₄ sich in der oberen Totpunktstellung befinden, während sich die Kolben 6₂ und 6₃ in der unteren Totpunktstellung befinden. Zumindest einer der Exzenterringe 3 ist starr mit einer als Schwenkhebel ausgebildeten Verdreheinrichtung 7 verbunden, der jeweils aus dem Flugkreis der Kurbelwelle 1 herausgeführt ist. Die Schwenkhebel 7 sind über eine Koppelstange 8 fest miteinander verbunden, so daß ein synchrones Verdrehen aller Exzenterringe 3 möglich ist. Die Koppelstange 8 ist über ein Zugelement 9 mit einem schematisch dargestellten Antrieb 10 verbunden. Bei einer Bewegung des Zugelementes in Richtung des Doppelpfeiles 11 werden die Schenkhebel 7 entsprechend hin und her verschwenkt (Doppelpfeil 12), so daß sich durch die Verdrehung der Exzenterringe 3 um eine ortsfeste Schwenkachse 14 dementsprechend auch jeweils die Höhenlage a der Drehachse 13 der Kurbelwelle 2 gegenüber einer Horizontalebene B als Bezugsebene verändert. Das Bezugszeichen 13 wird nachstehend auch für den der Kurbelwelle lzugehörigen Wellenstumpf verwendet.

Wie aus Fig. 1 ferner ersichtlich, ist die Drehachse 13 der Kurbelwelle 1 mit einer Exzentrizität e zur Schwenkachse 14 der Exzenterring 3 angeordnet und wird über die Schwenkhebel 7 aus einer angenommenen Mittelstelle (der Schwenkhebel 7 weist hierbei senkrecht nach unten) zur Veränderung der Höhenlage a nach oben oder unten bewegt. Dadurch wird die Drehachse 13 der Kurbelwelle in bezug auf die ortsfeste horizontale Bezugsebene B auch gegenüber der ortsfesten Schwenkachse 14 der Exzenterringe 3 angehoben oder abgesenkt. Das bedeutet aber, daß die Kolben 6 jeweils in der oberen Totpunktstellung um das gleiche Maß näher an das Brennraumdach des Zylinders heranreichen, so daß dementsprechend auch das Verdichtungsverhältnis erhöht und bei einer gegenläufigen Verdrehung der Exzenterring 3 vermindert wird.

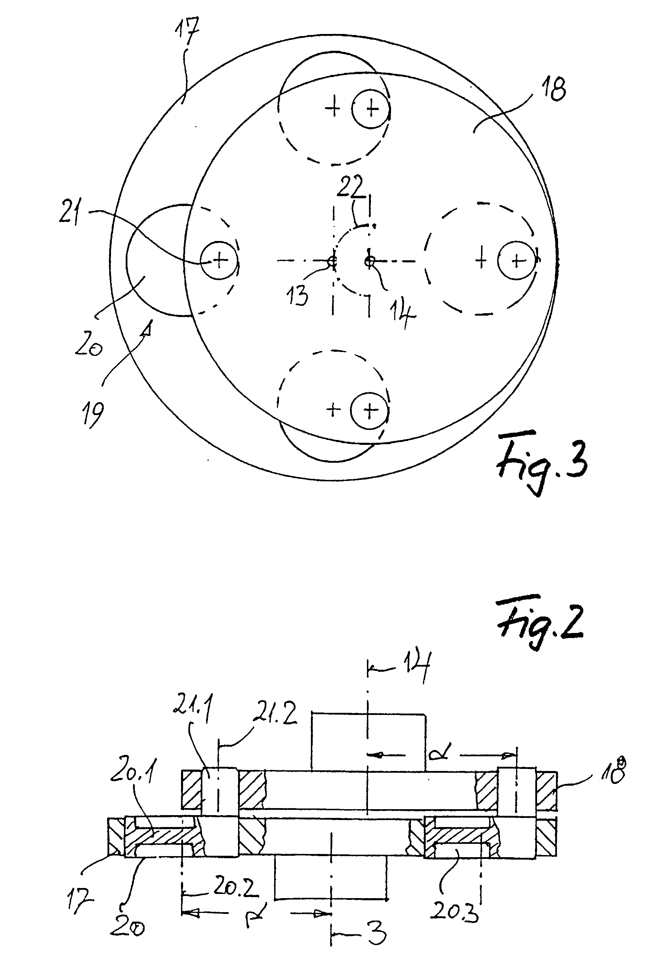

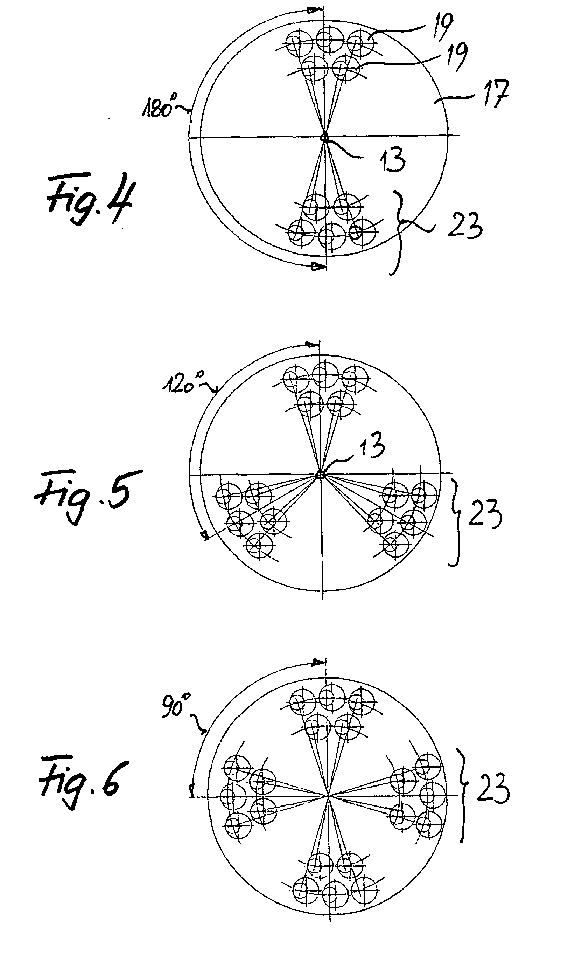

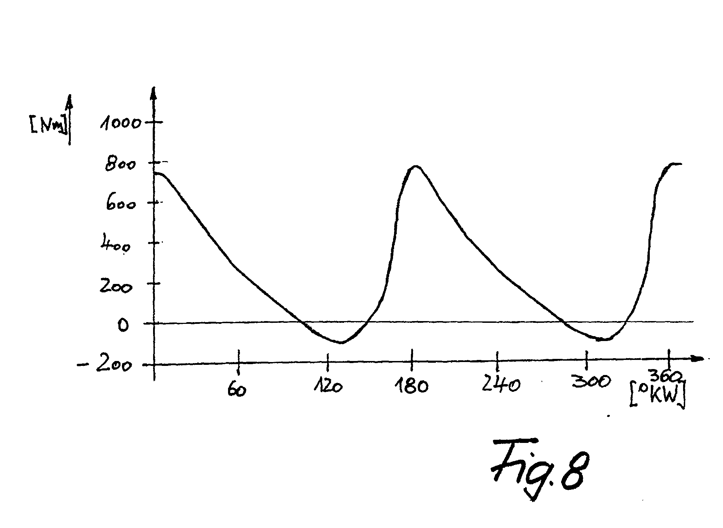

Der Abtrieb der Kolbenbrennkraftmaschine durch den die Kurbelwelle 1 verlängernden Wellenstumpf 13 erfolgt über eine Abtriebswelle 15, die fluchtend zur ortsfest gelagerten Schwenkachse 14 der Exzenterringe 3 angeordnet ist. Um den durch die Exzentriziztät e gegebenen Querabstand zwischen der Drehachse 13 und der Achse der Abtriebswelle 15 zu überbrükken, ist der mit der Kurbelwelle 1 verbundene Wellenstumpf 13 über ein Kupplungselement 16 mit der Abtriebswelle 15 verbunden. Das Kupplungselement 16 wird im wesentlichen durch einen ersten, mit dem Wellenstumpf 13 der Kurbelwelle 1 fest verbundenen Drehkörper 17 und einen zweiten, mit der Abtriebswelle 15 fest verbundenen Drehkörper 18 gebildet. Die beiden Drehkörper 17 und 18 sind in parallelen Drehebenen dicht nebeneinander angeordnet und sind über Kurbelelemente 19 miteinander verbunden. Der Kurbelradius der Kurbelelemente 19 entspricht der Exzenrizität e der Drehachse 13 der Kurbelwelle 1 zur ortsfesten Schwenkachse 14 der Exzenterringe 3. Funktion und konstruktiver Aufbau werden nachfolgend anhand der Fig. 2 und 3 sowie für eine bevorzugte Ausführungsform anhand von Fig. 7 näher erläutert.

In Fig. 2 ist schematisch ein Beispiel für ein Kupplungselement 16 im Vertikalschnitt dargestellt und in Fig. 3 in einer zugeordneten Aufsicht in Achsrichtung dargestellt.

Bei diesem Beispiel ist der Wellenstumpf 13 der Kurbelwelle 1 mit dem beispielsweise scheibenförmig ausgebildeten Drehkörper 17 fest verbunden, dessen Drehachse mit der Drehachse 13 der Kurbellwelle zusammenfällt.

Die Abtriebswelle 15 ist entsprechend mit einem Drehkörper 18 fest verbunden, dessen Drehachse mit der Schwenkachse 14 der Kurbelwelle zusammenfällt. Die Drehachsen 13 und 14 der beiden Wellen 13 und 15 sind gleichachsig ausgerichtet und im Querabstand der Exzentrizität e achsparallel angeordnet.

Die beiden Drehkörper 17 und 18 sind über wenigstens zwei Kurbelelemente 19 miteinander verbunden, die mit ihren Kurbelzapfen 20 und 21 frei drehbar in den zugeordneten Drehkörpern 17 und 18 gelagert sind. Der Abstand zwischen den beiden Kurbelzapfen 20 und 21 bildet den Kurbelradius, der der Exzentrizität e zwischen den beiden Drehachsen 13 und 14 entspricht. Die Kurbelkörper sind hierbei so ausgerichtet, daß ihre Kurbelarme in bzw. parallel zu der durch die beiden Achsen 13 und 14 definierten Ebene verlaufen. Wie Fig. 2 zeigt, sind die Kurbelelemente so gestaltet, daß sie einen ersten Zylinderkörper 20.1 mit großen Durchmesser und mit seiner Achse im Abstand hierzu angeordneten zweiten Zylinderkörper 21.1 mit geringerem Durchmesser aufweisen. Der Zylnderkörper 20.1 ist im treibenden Drehkörper 17 gelagert, während der Zylinderkörper 21.1 im getriebenen Drehkörper 18 gelagert ist. Die Lagerung der die Kurbel bildenden Zylinderkörper in den zugeordneten Drehkörpern kann beispielsweise über Wälzlager, insbesondere in Form von Nadellagern erfolgen. Hierbei kann es zweckmäßig sein, wenn wenigstens an einem Drehkörper die Wälzlager elastisch gegenüber dem Drehkörper abgestützt sind.

Wie die Aufsicht gem. Fig. 3 erkennen läßt, sind vier derartiger Kupplungselemente im jeweiligen Drehkörper in gleichem Abstand in Umfangsrichtung gesehen gelagert. Der Abstand R der Achse 20.2 des Kurbelzapfens 20.1 entspricht dem Abstand R der Achse 21.2 des Kurbelzapfens 21.1. Wie Fig. 3 ferner erkennen läßt, sind die Verbindungslinien zwischen den beiden Drehachsen 13 und 14 einerseits und den Achsen 20.2 und 21.2 andererseits gleichgerichtet, bei dem hier dargestellten Ausführungsbeispiel horizontal, d. h. parallel zur Bezugsebene B ausgerichtet, wie auch in Fig. 1 dargestellt.

Bei dem hier dargestellten Beispiel sind, wie Fig. 3 erkennen läßt, vier derartiger Koppelkörper in gleichem Abstand zueinander über den Umfang gesehen am Drehkörper 17 gelagert. Wie Fig. 3 ferner erkennen läßt, sind die Verbindungslinien zwischen den beiden Drehachsen 13 und 14 einerseits und den Drehachsen 21 und 22 andererseits gleichgerichtet, bei dem hier dargestellten Ausführungsbeispiel horizontal, d. h. parallel zur Bezugsebene B ausgerichtet, wie auch in Fig. 1 dargestellt.

Wird nun, wie anhand von Fig. 3 erläutert, über die Stelleinrichtung 10 die Kurbelwelle durch Verdrehen der Exzenterringe 3 verlagert, dann wird die Drehachse 13 auf einer entsprechenden Kreisbahn 22 bewegt und dementsprechend die Kurbelwelle 1 insgesamt gegenüber der horizontalen Bezugsebene B um ein dem Schwenkwinkel entsprechendes Maß vertikal angehoben bzw. bei entgegengesetzter Drehrichtung um ein entsprechendes Maß abgesenkt.

Da die Achsen 20.2 und 21.2 der Kurbelelemente den gleichen Abstand zueinander wie die Drehachsen 13 und 14 aufweisen, bewegen sich auch die Achsen 21.2 auf einer der Kreisbahn 22 entsprechenden Bahn. Damit ergibt sich gegenüber der Bezugsebene B für die Achsen 20.2 und 21.2 der Kurbelelemente 19 die gleiche Ausrichtung wie für die Achsen 13 und 14.

Wird nun der Drehkörper 17 antreibend gedreht, so wird über die Kurbelelemente 19 die Drehbewegung und damit auch das Drehmoment gleichsinnig und ohne Drehzahlschwankungen auf den Drehkörper 18 übertragen, da sich die Ausrichtung der beiden Kurbelachsen 20.2 und 21.2 und auch die Ausrichtung der beiden Drehachsen 13 und 14 während der Drehbewegung nicht ändert. Lediglich die Kurbelelemente 19 werden entsprechend relativ zwischen den beiden Drehkörpern 17 und 18 verdreht.

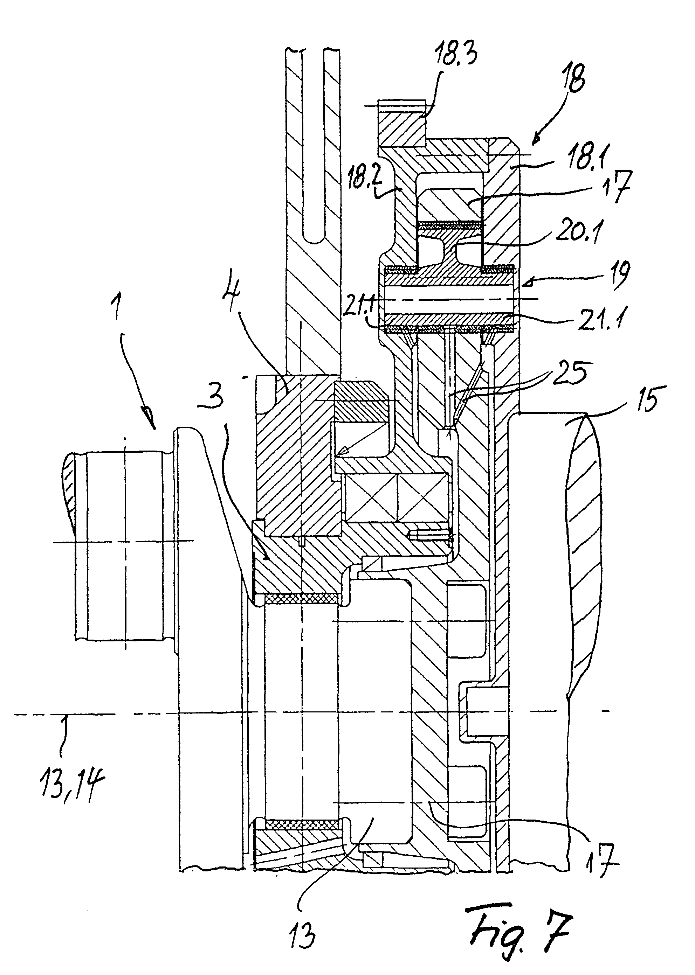

Bei der Verwendung eines derartigen Kupplungselementes an einer Kolbenbrennkraftmaschine in der anhand von Fig. 1 beschriebenen Art ist es zweckmäßig, die Kurbelelemente 19 nicht gleichmäßig über den Umfang verteilt anzuordnen, wie dies in Fig. 3 angedeutet ist, sondern unter Berücksichtigung der Zylinderzahl und des durch den Zündabstand der einzelnen Zylinder bedingten Gaskraftverlaufes in einem sogenannten "Koppelstern" in Gruppen zusammenzufassen. In Fig. 4 ist ein derartiger Koppelstern für einen 4-Zylinder-Reihenmotor dargestellt mit einem Zündabstand von 180°.

Fig. 5 zeigt einen Koppelstern für einen 3- oder 6-Zylinder-Reihenmotor, der einen Zündabstand von 120° aufweist.

Fig. 6 zeigt einen Koppelstern für einen 8-Zylinder-Reihenmotor mit einem Zündabstand von 90°. Fig. 4, 5 und 6 zeigen Koppelsterne für gängige Zündabstände und gängige Zylinderzahlen für 4-Takt-Kolbenbrennkraftmaschinen. Bei anderen Zylinderzahlen und anderen Zündabständen muß der Koppelstern entsprechend an die Kurbelwelle bzw. den Zündabstand angepaßt werden.

Wie aus Fig. 4 ersichtlich, sind bei dieser Konzeption die einzelnen Kurbelelemente 19 entsprechend der für einen 4-Zylinder-Reihenmotor gem. Fig. 1 vorgegebenen Bauform der Kurbelwelle in zwei um 180° versetzte Gruppen 23 auf den Drehkörpern 17 bzw. 18 angeordnet. Jede Gruppe 23 ist dann in wenigstens zwei Untergruppen unterteilt, wobei die Kurbelelemente 19 einer Untergruppe jeweils im gleichen Abstand zur jeweiligen Drehachse des zugeordneten Drehkörpers angeordnet sind, beispielsweise zur Drehachse 13 am Drehkörper 17. Die Untergruppen sind dann ihrerseits in unterschiedlichem Abstand zur zugehörigen Drehachse am zugeordneten Drehkörper angeordnet. Die Ausrichtung des durch die beiden Gruppen 23 gebildeten Koppelsterns entspricht der Ausrichtung der Kurbeln der Kurbelwelle, d. h. in Fig. 4 ist der dargestellte Drehkörper 17 für die Position der in Fig. 1 in der Totpunktlage dargestellten 4-Zylinder-Kurbelwelle wiedergegeben. Dadurch ist entsprechend Fig. 1 sichergestellt, daß die Kurbelelemente immer unter 90° zu der durch die Zylinderachsen der 4-Zylinder-Maschine definierten Vertikalebene ausgerichtet sind. Zweckmäßig ist jedoch eine gegenüber dem "Kurbelstern" der Kurbelwelle verdrehte Anordnung des Koppelsterns, und zwar so, daß die parallele Ausrichtung des Koppelsterns zur Zylinderachse dann gegeben ist, wenn die Zylinder jeweils gezündet werden, d. h. sich die Kolben jeweils im Zündtotpunkt befinden.

In Fig. 8 ist für eine 4-Zylinder-Reihenmaschine mit einem Zündabstand von 180° der Drehmomentverlauf über Grad-Kurbelwinkel dargestellt. Hierbei ist zu erkennen, daß jeweils im Bereich des Zündzeitpunktes ein Drehmomentmaximum auftritt. Werden nun die Kurbelelemente in Gruppen, jeweils abgestimmt auf die jeweilige Kolbenbrennkraftmaschine, zusammengefaßt, wie dies vorstehend in Fig. 4 für eine 4-Zylinder-Reihenmaschine dargestellt ist, dann werden die Gruppen jeweils so angeordnet, daß sie sich im Bereich der oberen Totpunktstellung befinden, wenn das Drehmomentmaximum auf die Kurbelwelle einwirkt. Da für die Übertragbarkeit des Drehmomentes der Kurbelwelle auf die Abtriebswelle die Wirkradien der Kurbelelemente 19 zum Drehpunkt maßgebend sind, können auf diese Weise die Kurbelelemente so angeordnet werden, daß bei großen Kräften auch die größten Wirkradien zum Tragen kommen. Das bedeutet, daß im Kurbelwinkel der größten Belastung auch eine Anhäufung von Koppelelementen zu sein hat. Messungen haben ergeben, daß bei einer derartigen Anordnung die Kurbelelemente belastungskonform positioniert sind und die auf die Kurbelelemente einwirkenden Lagerkräfte in etwa ein Drittel niedriger sind gegenüber eine Ausführungsform entsprechend Fig. 2 bzw. Fig. 3, bei der die Kurbelelemente gleichmäßig auf dem Umfang verteilt angeordnet sind.

Die in Fig. 2 und 3 schematisch dargestellte Ausführungsform eines Kupplungselementes kann zum einen als allgemeines Maschinenbauelement verwendet werden. Es ist aber auch möglich, ein derart einfach aufgebautes und schmalbauendes Kupplungselement an einer Kolbenbrennkraftmaschine in der in Fig. 1 wiedergegebenen Bauform an dem der Antriebsseite der Kolbenbrennkraftmaschine abgewandten freien Ende der Kurbelwelle anzuordnen, um so am Motorgehäuse 4 befestigte Nebenantriebe oder auch eine Nockenwelle auch dann antreiben zu können, wenn zum Zwecke der Änderung des Verdichtungsverhältnisses die Kurbelwelle, wie dargestellt, verlagerbar ist. Diese einfache Bauform reicht aus, um die hier erforderlichen Drehmomente zu übertragen.

Über das auf der Antriebsseite der Kolbenbrennkraftmaschine angeordnete Kupplungselement 16 muß jedoch das volle Antriebsdrehmoment der Kolbenbrennkraftmaschine übertragbar sein, so daß hier wesentliche höhere Drehmomente durchgeleitet werden müssen. Fig. 7 zeigt hierbei eine besondere Ausführungsform für ein antriebsseitiges Kupplungselement für eine Kolbenbrennkraftmaschine.

Bei dieser Bauform ist die Kurbelwelle 1 im Exzenterring 3 gelagert, der seinerseits, wie anhand von Fig. 1 beschrieben, drehbar im Motorgehäuse 4 gelagert ist. Der scheibenförmige Drehkörper 17 ist fest mit dem Wellenstumpf 13 verbunden.

Die Abtriebswelle 15 ist ihrerseits mit dem Drehkörper 18 verbunden, der bei dem hier dargestellten Ausführungsbeispiel zwei fest miteinander verbundene Scheibenteile 18.1 und 18.2 aufweist, zwischen denen der ebenfalls scheibenförmig ausgebildete Drehkörper 17 angeordnet ist. Die beiden Drehkörper 17 und 18 sind wiederum über Kurbelelemente 19 miteinander verbunden, die bei dem hier dargestellten Ausführungsbeispiel einen ersten großen Zylinderkörper 20.1 und zwei beide Seitenflächen des großen Zylinderkörpers überragende Zylinderkörper 21.1 aufweist, so daß das Kurbelelement 19 doppelseitig und damit kippmomentenfrei an den Drehkörpern 17 und 18 gelagert ist.

Der dem Motorgehäuse 4 zugewandte Scheibenteil 18.2 ist über ein Wälzlager 24 auf einem entsprechenden Ansatz des Exzenterringes 3 gelagert, so daß auch hier eine einwandfreie Abstützung des Kupplungsbereiches gegeben ist.

Die Kurbelelemente 19 sind in Wälzlagern oder auch in Gleitlagern gelagert, wobei die Lager wiederum gegenüber den entsprechenden Drehkörpern 17 bzw. 18 gummielastisch abgestützt sein können. Dies ist dann von Vorteil, wenn die Kurbelwelle selbst in einem Gleitlager gelagert ist. Über die gummielastische Lagerung der Wälzlager an den Kurbelelementen kann dann das verhältnismäßig große Radialspiel der Kurbelwellenlagerung ausgeglichen werden. Zweckmäßig ist es jedoch, wenn bei einer gleitgelagerten Kurbelwelle auch die Kurbelelemente 19 entsprechend gleitgelagert sind. Durch die Lagerung des Drehkörpers 18 über den Scheibenteil 18.2 mittels Wälzlager auf dem Exzenterring 3 ist sichergestellt, daß das Lagerspiel der Exzenterringe in die Lagerung des Drehkörpers 18 nicht eingeht.

Die in Fig. 7 dargestellte gehäuseartige Bauweise für den Drehkörper 18 stellt eine gestaltfeste Konstruktion dar, wobei die Kurbelelemente zweiseitig und sehr steif gelagert sind. Die Lagerung des Drehkörpers 18 auf dem Exzenterring 3 bietet darüber hinaus die Möglichkeit, den Drehkörper 18 mit einem Zahnkranz 18.3 zu versehen, der mit einem Anlasserritzel in Eingriff gebracht werden kann.

Die gehäuseartige Gestaltung des Drehkörpers 18 erlaubt es ferner, den vom Scheibenteil 18.1 und Scheibenteil 18.2 begrenzten Innenraum als Ölraum auszubilden, der an den Motorölkreislauf angeschlossen ist. Im Betrieb füllt sich dieser Raum unter dem Einfluß der Fliehkraft über den gesamten Umfang, so daß über die jeweils den einzelnen Lagern der Kurbelelemente zugeordneten Schmierkanäle 25 Öl zugeführt wird. Der durch die Fliehkraft bewirkte drehzahlabhängige Öldruck sorgt dafür, daß in jedem Fall Öl zu den Lagerstellen der Kurbelelemente gelangt.

In Fig. 3 ist ferner der in seinem ortsfesten Traglager 4 (hier nur angedeutet) gelagerte Exzenterring 3 ebenfalls dargestellt. Wird nun der Exzenterring 3 in Richtung des Pfeiles 12 verdreht, dann wird die Drehachse 13 der Kurbelwelle 1 zusammen mit dem Kurbelwellenlager 2 auf einer entsprechenden Kreisbahn 26 bewegt und dementsprechend die Kurbelwelle insgesamt gegenüber der horizontalen Bezugsebene um ein Maß entsprechend dem Schwenkwinkel angehoben und bei einer entgegengesetzten Drehrichtung um ein entsprechendes Maß abgesenkt.

Da die Drehachsen 21 und 22 der Lagerteile und Gegenlagerteile des Koppelelements 23 den gleichen Querabstand aufweisen wie die Drehachsen 13 und 14, bewegt sich die Drehachse 21 des Lagerteils 19 auf der gleichen Kreisbahn wie die Drehachse 13 der Kurbelwelle. Damit ergibt sich gegenüber der Bezugsebene B für die Koppelelemente 23 zwischen dem Drehkörper 17 und dem Drehkörper 18 die gleiche Ausrichtung der beiden Achsen 21 und 22 wie bei den Achsen 13 und 14.

Wird nun der Drehkörper 17 antreibend gedreht, so wird über die Koppelelemente 23 die Drehbewegung und damit auch das Drehmoment gleichsinnig und ohne Drehzahlschwenkungen auf den Drehkörper 18 übertragen, da sich die Ausrichtung der beiden Drehachsen 21, 23 und die Ausrichtung der beiden Drehachsen 13, 14 während der Drehbewegung nicht ändert. Lediglich die Koppelelemente 23 werden entsprechend relativ in den Drehkörpern17 und 18 verdreht.

Das vorstehend dargestellte Kurbelelement 19 kann auch in der Weise abgewandelt werden, daß am Drehkörper 18 ein dem Zylinderkörper 21.1 entsprechender Kurbelzapfen fest angeordnet ist, der mit seinem freien Ende in einer entsprechenden Lagerbohrung im Zylinderkörper 20.1 gelagert ist. Diese Ausführungsform ist kippmomentenfrei.

Die Erfindung wurde vorstehend anhand des Anwendungsfalls einer Kolbenbrennkraftmaschine erläutert. Sie ist in gleicher Weise für alle Kolbenmaschinen anwendbar, bei denen zur Veränderung der Betriebsbedingungen durch Verlagerung der Kurbelwelle der "aktive" Hubraum der einzelnen Zylinder einstellbar ist, beispielsweise bei einem Kolbenverdichter. Da hierfür bei dem erfindungsgemäßen Kupplungselement auch bei einer Verlagerung der Kurbelwelle relativ zur Antriebswelle die Abtriebswelle, d. h. die Kurbelwelle ohne Drehzahlschwankungen angetrieben wird, entfallen nachteilige Rückwirkungen auf den Antrieb, die bei einer durch die Kupplung erzeugten Drehungleichförmigkeit auftreten können.

Darüber hinaus ist das erfindungsgemäße Kupplungselement aufgrund seiner konstruktiven Vorteile (kurze Baulänge, Vervielfachung der Kurbelelemente zur Übertragung großer Drehmomente) und betrieblichen Vorteile (Drehzahlkonstanz bei Änderung der Position der Wellen zueinander) für alle Anwendungsfälle einsetzbar, in denen vergleichbare Verlagerungen zweier miteinander verbundener Wellen zueinander vorgenommen werden müssen.

## Patentansprüche

1. Kupplungselement zur Verbindung von zwei gleichachsig hintereinander und mit einer Exzentrizität (e) achsparallel zueinander angeordneten Wellen (13; 15), wobei die Höhenlage (a) einer Welle (13) zu einer festen Bezugsebene (B) durch achsparalleles Bewegen auf einer Kreisbahn (22) einstellbar ist, deren Durchmesser der Exzentrizität (e) entspricht, mit zwei in parallelen Drehebenen ausgerichteten Drehkörpern (17; 18), die jeweils mit den einander zugeordneten Wellenenden (13; 15) verbindbar sind und die jeweils im gleichen radialen Abstand (R) zur jeweiligen Drehachse jeweils mit Lagerbohrungen versehen sind, sowie mit beide Drehkörper (17; 18) verbindenden Kurbelelementen (19), deren Kurbelradius der Exzentrizität (e) entspricht, wobei die Kurbelelemente (19) in Umfangsrichtung gesehen, im Abstand zueinander angeordnet sind, **dadurch gekennzeichnet, daß** jeweils mehrere Kupplungselemente (19) in Gruppen (23) angeordnet sind, wobei die Gruppen (23) in Umfangsrichtung gesehen, in gleichem Umfangswinkel zueinander angeordnet sind.

2. Kupplungselement nach Anspruch 1, **dadurch gekennzeichnet, daß** die Kurbelelemente einer Gruppe in wenigstens zwei Untergruppen angeordnet sind, wobei die Kurbelelemente (19) einer Untergruppe jeweils im gleichen Abstand zur jeweiligen Drehachse (13; 15) des zugeordneten Drehkörpers (17; 18) angeordnet sind und die Untergruppen ihrerseits in unterschiedlichem Abstand zur zugehörigen Drehachse (13; 15) des zugeordneten Drehkörpers (17; 18) angeordnet sind.

3. Kupplungselement nach Anspruch 1 oder 2, **dadurch gekennzeichnet, daß** das Kurbelelement (19) aus einem ersten und einem zweiten Zylinderkörper (20.1, 21.1) gebildet wird, die achsversetzt zueinander angeordnet sind.

4. Kupplungselement nach Anspruch 3, **dadurch gekennzeichnet, daß** die Zylinderkörper den gleichen Durchmesser aufweisen.

5. Kupplungselement nach einem der Ansprüche 1 bis 3, **dadurch gekennzeichnet, daß** das Kurbelelement (19) einen ersten Zylinderkörper (20.1) aufweist, der einen größeren Durchmesser als der zweite Zylinderkörper (21.1) aufweist, wobei der zweiten Zylinderkörper (21.1) sich innerhalb des Außenumfangs des ersten Zylinderkörpers (20.1) erstreckt und diesen in Achsrichtung zumindest auf einer Seite überragt.

6. Kupplungselement nach einem der Ansprüche 1 bis 5, **dadurch gekennzeichnet, daß** der erste Zylinderkörper in seinem vom zweiten Zylinderkörper nicht überdeckten Bereich mit einer Unwucht mindernden Ausnehmung (20.3) versehen ist.

7. Kupplungselement nach einem der Ansprüche 1 bis 6, **dadurch gekennzeichnet, daß** der eine Drehkörper (18) zwei mit Abstand zueinander angeordnete und fest miteinander verbundene Scheibenteile (18.1, 18.2) aufweist und daß der andere Drehkörper (17) scheibenförmig ausgebildet ist und zwischen den beiden Scheibenteilen (18.1, 18.2) angeordnet ist und daß die Kurbelelemente (19) jeweils in beiden Scheibenteilen des einen Drehkörpers (18) einerseits und im Drehkörper (17) andererseits gelagert sind.

8. Kupplungselement nach Anspruch 7, **dadurch gekennzeichnet, daß** der aus zwei Scheibenteilen (18.1, 18.2) zusammengesetzte Drehkörper (18) mit einem Scheibenteil (18.1) mit der ortsfest gelagerten Welle (15) fest verbindbar ist und mit einem anderen Scheibenteil (18.2) auf einer koaxial zur Welle (3) angeordneten, ortsfesten Abstützung (3) drehbar gelagert ist.

9. Kolbenmaschine mit im Gehäuse (4) angeordneten Zylindern und darin geführten Kolben (6), die über Pleuel (5) mit einer Kurbelwelle (1) verbunden sind, die in Exzenterringen (3) gelagert ist, die ihrerseits im Gehäuse (4) verdrehbar gelagert sind und von denen zumindest ein Teil jeweils mit einer Verdreheinrichtung (7) versehen ist, die mit einem Stellantrieb in Verbindung steht, wobei die Kurbelwelle (1) über ein Kupplungselement nach einem oder mehreren der Ansprüche 1 bis 8 (16) mit einer Abtriebswelle (15) verbunden ist. .

## Claims

1. A coupling element for connecting two shafts (13; 15) arranged equiaxially in series and with an eccentricity (e) paraxially to each other, the vertical position (a) of a shaft (13) relative to a fixed reference plane (B) being adjustable by paraxial movement on a circular path (22), the diameter of which corresponds to the eccentricity (e), with two rotary bodies (17; 18) oriented in parallel planes of rotation, each of which bodies can be connected to the shaft ends (13; 15) which are associated with each other and each of which is provided with bearing bores at the same radial distance (R) from the respective axis of rotation, and also with crank elements (19) which connect both rotary bodies (17; 18), the crank throw of which corresponds to the eccentricity (e), the crank elements (19), viewed in the peripheral direction, being arranged spaced apart from each other, **characterised in that** in each case a plurality of coupling elements (19) are arranged in groups (23), the groups (23), viewed in the peripheral direction, being arranged at the same angle at the circumference to each other.

2. A coupling element according to Claim 1, **characterised in that** the crank elements of one group are arranged in at least two sub-groups, the crank elements (19) of one subgroup each being arranged at the same distance from the respective axis of rotation (13; 15) of the associated rotary body (17; 18) and the sub-groups in turn being arranged at different distances from the associated axis of rotation (13; 15) of the associated rotary body (17; 18).

3. A coupling element according to Claim 1 or 2, **characterised in that** the crank element (19) is formed of a first and a second cylindrical body (20.1, 21.1), which are axially offset relative to each other.

4. A coupling element according to Claim 3, **characterised in that** the cylindrical bodies are of the same diameter.

5. A coupling element according to one of Claims 1 to 3, **characterised in that** the crank element (19) has a first cylindrical body (20.1) which has a larger diameter than the second cylindrical body (21.1), the second cylindrical body (21.1) extending within the outer periphery of the first cylindrical body (20.1) and projecting beyond the latter in the axial direction at least on one side.

6. A coupling element according to one of Claims 1 to 5, **characterised in that** the first cylindrical body is provided with a recess (20.3) which reduces the unbalanced mass in its region which is not covered by the second cylindrical body.

7. A coupling element according to one of Claims 1 to 6, **characterised in that** one rotary body (18) has two disc parts (18.1, 18.2) spaced apart from each other and securely joined to each other, and that the other rotary body (17) is disc-shaped and is arranged between the two disc parts (18.1, 18.2) and that the crank elements (19) are each mounted in both disc parts of the one rotary body (18) on one hand and in the rotary body (17) on the other hand.

8. A coupling element according to Claim 7, **characterised in that** the rotary body (18) composed of two disc parts (18.1, 18.2) can be securely connected by a disc part (18.1) to the fixed mounted shaft (15) and is rotationally mounted on a fixed support (3) arranged coaxially to the shaft (3) by another disc part (18.2).

9. A piston engine having cylinders arranged in the housing (4) and pistons (6) guided in said cylinders, which pistons are connected via connecting-rods (5) to a crankshaft (1) which is mounted in eccentric rings (3) which in turn are mounted so that they can be turned in the housing (4) and at least one part of which in each case is provided with a turning means (7) which is connected to an actuating drive, the crankshaft (1) being connected via a coupling element (16) according to one or more of Claims 1 to 8 to a driving shaft (15).

## Revendications

1. Elément d'accouplement pour la liaison de deux arbres (13 ; 15) placés coaxialement l'un derrière l'autre et parallèlement l'un par rapport à l'autre avec un écart transversal (e), dans lequel la position en hauteur (a) d'un arbre (13) par rapport à un plan de référence (B) fixe est réglable par un déplacement à axe parallèle sur une trajectoire circulaire (22), dont le diamètre correspond à l'écart transversal (e), comprenant deux corps rotatifs (17 ; 18) orientés sur des plans de rotation parallèles et pouvant être reliés respectivement aux extrémités d'arbres (13 ; 15) qui leur sont associées, et qui sont respectivement pourvus d'alésages de roulement situés chacun à la même distance radiale (R) de l'axe de rotation respectif, et comprenant des éléments de manivelle (19) reliant les deux corps rotatifs (17 ; 18) et dont le rayon de manivelle correspond à l'écart transversal (e), les éléments de manivelle (19), vus dans la direction circonférentielle, étant espacés l'un par rapport à l'autre, **caractérisé en ce que** plusieurs éléments d'accouplement (19) sont disposés en groupes respectifs (23), les groupes étant disposés à un même angle inscrit les uns des autres dans le sens circonférentiel.

2. Elément d'accouplement selon la revendication 1, **caractérisé en ce que** les éléments de manivelle d'un groupe sont disposés en au moins deux sous-groupes, les éléments de manivelle (19) d'un sous-groupe étant disposés chacun à la même distance de l'axe de rotation respectif (13 ; 15) du corps rotatif (17 ; 18) associé, et les sous-groupes, de leur côté, étant disposés à des distances différentes de l'axe de rotation (13 ; 15) correspondant du corps rotatif (17 ; 18) associé.

3. Elément d'accouplement selon la revendication 1 ou 2, **caractérisé en ce que** l'élément de manivelle (19) est formé par un premier et un deuxième corps de cylindre (20.1, 21.1) qui sont disposés à axe décalé l'un par rapport à l'autre.

4. Elément d'accouplement selon la revendication 1, **caractérisé en ce que** les corps de cylindre présentent le même diamètre.

5. Elément d'accouplement selon une des revendications 1 à 3, **caractérisé en ce que** l'élément de manivelle (19) présente un premier corps de cylindre (20.1) ayant un diamètre plus grand que le deuxième corps de cylindre (21.1), le deuxième corps de cylindre (21.1) s'étendant à l'intérieur de la circonférence extérieure du premier corps de cylindre (20.1) et faisant saillie dans le sens axial au moins sur un côté de celui-ci.

6. Elément d'accouplement selon une des revendications 1 à 5, **caractérisé en ce que** le premier corps de cylindre, dans sa zone non recouverte par le deuxième corps de cylindre, est pourvu d'un évidement (20.3) réduisant le balourd.

7. Elément d'accouplement selon une des revendications 1 à 6, **caractérisé en ce que** l'un des corps rotatifs (18) présente deux parties de disque (18.1, 18.2) disposées à distance l'une de l'autre et reliées fixement ensemble, et **en ce que** l'autre corps rotatif (17) est configuré sous la forme d'un disque et disposé entre les deux parties de disque (18.1, 18.2), et **en ce que** les éléments de manivelle (19) sont à chaque fois logés dans les deux parties de disque dudit un des corps rotatifs (18) d'une part et dans ledit corps rotatif (17) d'autre part.

8. Elément d'accouplement selon la revendication 7, **caractérisé en ce que** le corps rotatif (18) composé de deux parties de disque (18.1, 18.2) peut être relié de manière fixe, par une partie de disque (18.1), à l'arbre (15) monté de manière immobile, et **en ce qu'**il est monté en rotation, par une autre partie de disque (18.2) sur un support (3) immobile disposé coaxialement à l'arbre (3).

9. Machine à pistons comprenant des cylindres disposés dans le carter (4) et des pistons (6) guidés à l'intérieur de ceux-ci, qui sont reliés à l'aide de bielles (5) à un vilebrequin (1), lequel est monté dans des anneaux excentriques (3) qui, de leur côté, sont logés de manière rotative dans le carter (4) et dont du moins une partie est respectivement pourvue d'un dispositif de rotation (7), qui est en liaison avec un mécanisme de commande, le vilebrequin (1) étant relié à un arbre d'entraînement (15) à l'aide d'un élément d'accouplement (16) selon une ou plusieurs des revendications 1 à 8.
